# EUROPÄISCHE PATENTSCHRIFT

(11) **EP 2 084 377 B1**
(45) Veröffentlichungstag und Bekanntmachung des Hinweises auf die Patenterteilung: **11.01.2012**
(21) Anmeldenummer: 07856216.2
(22) Anmeldetag: 22.11.2007
(51) Int. Cl.: F02B 69/04, F02D 19/06

(54) **BETRIEBSVERFAHREN FÜR EINE WAHLWEISE MIT FLÜSSIGEM UND GASFÖRMIGEM KRAFTSTOFF BETREIBBARE BRENNKRAFTMASCHINE UND KRAFTSTOFFZUFÜHRSYSTEM**
OPERATING METHOD FOR AN INTERNAL COMBUSTION ENGINE WHICH CAN BE SELECTIVELY OPERATED BY MEANS OFA LIQUID FUEL AND A GASEOUS FUEL, AND FUEL SUPPLY SYSTEM
PROCÉDÉ D'EXPLOITATION D'UN MOTEUR À COMBUSTION INTERNE ENTRAÎNÉ AU CHOIX AU MOYEN D'UN CARBURANT LIQUIDE ET D'UN CARBURANT GAZEUX ET SYSTÈME D'ALIMENTATION EN CARBURANT

(30) Priorität: 29.11.2006 DE 102006056389
(43) Veröffentlichungstag der Anmeldung: 05.08.2009
(73) Patentinhaber: Audi AG, 85045 Ingolstadt (DE)
(72) Erfinder: LIEBSCH, Stephan, 09395 Hormersdorf (DE); AVRAMOPOULOS, Iraklis, 10713 Berlin (DE)
(74) Vertreter: Lehle, Josef
(86) Internationale Anmeldenummer: PCT/EP2007/010111
(87) Internationale Veröffentlichungsnummer: WO 2008/064814

(56) Entgegenhaltungen:
- WO-A-84/01339
- WO-A-89/00640
- CA-A1- 2 442 601
- CH-A5- 647 847
- DE-A1- 19 847 388

## Beschreibung

Die Erfindung betrifft ein Betriebsverfahren für eine wahlweise mit einem flüssigem und einem weiteren zweiten Kraftstoff betreibbare Brennkraftmaschine sowie ein Kraftstoffzuführsystem für eine derartige Brennkraftmaschine.

Aus der DE 195 39 170 A1 ist ein derartiges Betriebsverfahren bekannt. Die Brennkraftmaschine ist wahlweise mit Benzin oder Ergas betreibbar.

Darüber hinaus ist aus der DE 203 09 001 U1 ein Einspritzventil für flüssige und gasförmige Kraftstoffe bekannt.

Ferner ist aus der DE 198 47 388 A1 ein Kraftstoffeinspritzsystem bekannt, welches durch Kraftstoff kühlbare Einspritzdüsen aufweist. Es ist ausschließlich der Betrieb mit flüssigen Kraftstoffen möglich. Die Kühlung der Einspritzdüsen erfolgt bevorzugt durch fließenden Kraftstoff, welcher die Einspritzdüse durchströmt. Ein in Abhängigkeit der Motorbetriebsparameter geregelter Kraftstoff-Volumenstrom umströmt den vorderen Bereich der Einspritzdüse. Durch den strömenden Kraftstoff kommt es zu einer erzwungenen Konvektion, wodurch ein Wärmeübergang von der Einspritzdüse auf den fließenden, als Kühlmittel dienenden Kraftstoff stattfinden kann.

Die CA 2 442 601 A1 offenbart ein Einspritzsystem für einen gasbetriebenen Verbrennungsmotor mit einer Zündöl-Zündung, welcher ein Einspritzventil für das Zündöl umfasst, mittels welchem flüssiges Zündöl in einen Verbrennungsraum des Verbrennungsmotors einspritzbar ist. Das Einspritzsystem umfasst weiterhin ein Kühlsystem, mittels welchem das Zündöl, welches innerhalb des Einspritzventils zum Einspritzen des Zündöls gehalten ist, kühlbar ist, um das Zündöl auf einer Temperatur unterhalb seines Siedebeginns zu halten, während der Verbrennungsmotor läuft.

Das besagte Einspritzventil weist eine Düse sowie einen Ventilkörper auf, wobei die Düse von dem Ventilkörper derart thermisch isoliert ist, dass Oberflächen der Düse, welche in Kontakt mit dem in den Verbrennungsraum eingespritzten Zündöl kommen können, eine Temperatur beibehalten können, die nicht wesentlich unterhalb des Siedeendes des Zündöls liegt, während der Verbrennungsmotor läuft.

Aus der WO 84/01339 A ist ein Verfahren zum Betreiben eines Dieselmotors bekannt, bei welchem einer Verbrennungskammer des Dieselmotors über ein Gasventil eine kontrollierte Menge von Inertgas zugeführt wird, um das Gasventil zu kühlen, wenn der Motor alleinig mit Dieselöl betrieben wird.

Die CH 147847 offenbart eine Einrichtung zur Kraftstoffzufuhr an einem Dieselmotor, mit einem Leichtkraftstoff- und einem Schwerkraftstoffkreis, die an den Dieselmotor abwechselnd anschließbar sind und die einen Behälter und eine Förderpumpe aufweisen, wobei die Kreise mit der Saugleitung der Einspritzpumpe des Dieselmotors über ein Absperrmittel verbunden sind, und wobei der Leichtkraftstoffkreis mit dem Dieselmotor zur Kühlung der Kraftstoffeinspritzdüsen und zur Vorwärmung der Kraftstoffpumpen kommuniziert. Das Absperrmittel enthält ein Oder-Element, dessen Ausgang an die Saugleitung der Kraftstoffeinspritzpumpe des Dieselmotors angeschlossen ist. Ein Druckregler zur Erzeugung eines Bezugsdrucks ist mit dem ersten Eingang des Oder-Elements verbunden, und der zweite Eingang des Oder-Elements ist mit der Förderpumpe des Schwerkraftstoffkreises und mit einer Umschalteinheit verbunden, deren Ausgang an den Behälter des Schwerkraftstoffkreises angeschlossen ist.

Die WO 89/00640 offenbart einen Verbrennungsmotor, der dazu ausgelegt ist, in einem ersten Betriebszustand als ein Benzin-Einspritzungsmotor zu arbeiten, in welchem er Benzin nutzt, welches in abgemessenen Mengen von einer Benzineinspritzungseinrichtung eingespritzt wird. Die Benzineinspritzungseinrichtung wird von ersten Steuerungsmitteln gesteuert, welche auf einen oder mehrere Sensoren reagieren. Diese erfassen unterschiedliche Zustände oder Bedarfe des Verbrennungsmotors während dessen Betrieb.

Der Verbrennungsmotor ist auch dazu ausgelegt, in einem alternativen Betriebszustand zu arbeiten, in welchem er LPG (Flüssiggas) als Kraftstoff nutzt, welcher von einem Injektor in einen Lufteinlass eingespritzt wird, wobei der Injektor von Steuerungsmitteln gesteuert wird, die auf den selben bzw. dieselben Sensoren reagieren, die im ersten Betriebszustand dazu genutzt werden, den Benzinfluss zum Verbrennungsmotor einzustellen.

Darüber hinaus ist bekannt, dass Gas und Benzin gleichzeitig, beispielsweise über jeweils eigene Mittel zur Zuführung in das anzusaugende Gemisch bzw. den Brennraum zugeführt werden können. Im Gasbetrieb kann es zu Überhitzungen der Einspritzdüsen für das Benzin kommen. Zudem muss in bestimmten Betriebszuständen des Motors zur Absenkung der Abgastemperatur mehr Gas zugeführt werden als stöchiometrisch erforderlich.

Daraus resultiert ein relativ hoher Gasverbrauch in Betriebsbereichen, in denen die Abgastemperatur abgesenkt werden muss. Darüber hinaus kann es zu Schädigungen von Bauteilen, insbesondere der Einspritzdüsen zur direkten Einspritzung des Benzins, kommen.

Daher ist es Aufgabe der vorliegenden Erfindung, ein Betriebsverfahren sowie ein Kraftstoffzuführsystem zu schaffen, mit dem eine Brennkraftmaschine mit flüssigem und gasförmigem Kraftstoff wahlweise betrieben werden kann und eine effektivere und effizientere Betriebsweise ermöglicht werden kann.

Diese Aufgabe wird durch ein Betriebsverfahren, welches die Merkmale nach Patentanspruch 1 aufweist, und ein Kraftstoffeinspritzsystem, welches die Merkmale nach Patentanspruch 13 aufweist, gelöst.

Ein erfindungsgemäßes Betriebsverfahren ermöglicht ein wahlweises Betreiben einer Brennkraftmaschine mit flüssigem Kraftstoff und zumindest einem weiteren zweiten Kraftstoff. Bevorzugt ist der zweite Kraftstoff gasförmig, insbesondere Erdgas. Bei dem Betriebsverfahren wird zwischen zwei unterschiedlichen Betriebsarten umgeschaltet und so von einem Flüssigkraftstoffbetrieb in einen Gasbetrieb übergegangen. Im Gasbetrieb der Brennkraftmaschine wird zumindest eine temperaturbelastete Komponente der Brennkraftmaschine mit dem flüssigen Kraftstoff gekühlt. Durch diese Vorgehensweise kann ein energieeffizienteres und effektiveres Betriebsverfahren einer derartigen Brennkraftmaschine ermöglicht werden.

Insbesondere kann dann der Gasverbrauch in Betriebsbereichen abgesenkt werden, in denen die Abgastemperatur abgesenkt werden muss. Zur Absenkung der Abgastemperatur muss nicht mehr so viel gasförmiger Kraftstoff zugeführt werden und darüber hinaus kann durch die Kühlung mit flüssigem Kraftstoff die Kühlungswirkung erhöht werden. Die Kühlungswirkung des flüssigen Kraftstoffs, insbesondere Benzin, ist gegenüber gasförmigem Kraftstoff, insbesondere Erdgas, aufgrund der verfügbaren Verdampfungsenthalpie höher. Darüber hinaus kann insbesondere in diesem Gasbetrieb das Überhitzen von kritischen Komponenten, wie beispielsweise der Mittel zur Zuführung von flüssigem Kraftstoff, verhindert werden.

Die Zuführung des flüssigen Kraftstoffs zur zu kühlenden Komponente wird abhängig von der Temperatur dieser Komponente durchgeführt. Somit kann situationsabhängig und präzisiert ein entsprechendes Kühlen mit dem flüssigen Kraftstoff durchgeführt werden. Nur dann, wenn ein kritischer Temperaturwert erreicht oder überschritten ist, erfolgt die Kühlung mit dem flüssigen Kraftstoff und die entsprechende Zuführung. Die Effizienz und Effektivität kann dadurch erhöht werden. Darüber hinaus kann dadurch auch Kraftstoff eingespart werden.

Bevorzugt wird die Menge des flüssigen Kraftstoffs abhängig von der Temperatur der zu kühlenden Komponente zugeführt. Auch dadurch kann ein hoch effektives Kühlen erreicht werden, da nur so viel flüssiger Kraftstoff zur Kühlung zugeführt wird, wie er gegenwärtig erforderlich ist.

Falls die Temperatur der Komponente nicht gemessen wird, kann durch geeignete Mittel zur Steuerung und Regelung beispielsweise durch Kennwerte, Kennlinien und Kennfelder in einem Motorsteuergerät die Dosierung des kühlenden Kraftstoffs so erfolgen, dass anhand der verfügbaren Betriebsparameter eine ausreichende Kühlung der Komponente gewährleistet wird.

Bevorzugt wird der flüssige Kraftstoff zum Kühlen solange der zu kühlenden Komponente zugeführt, bis eine Schwellwerttemperatur der Komponente erreicht oder unterschritten wird.

Bevorzugt wird das Kühlen der Komponente mit dem flüssigen Kraftstoff nach dem Vorgang der Gasverbrennung in der Expansionsphase durchgeführt. Der flüssige Kraftstoff kann vorzugsweise in Regionen des Brennraums der Brennkraftmaschine eingebracht werden, in denen die Verbrennung abgeschlossen ist.

In bestimmten Situationen des Motorbetriebs, beispielsweise wenn durch die kühlende Wirkung des flüssigen Kraftstoffs der Luftaufwand des Motors erhöht werden soll oder der Luftbedarf durch Zufuhr eines Kraftstoffs mit geringerem Mindestluftbedarf reduziert werden soll, wird das Kühlen der Komponenten vorzugsweise in der Ansaugphase des Motors durchgeführt.

Das Kühlen der Komponente mit dem flüssigen Kraftstoff wird bevorzugterweise bei einem Zustand im Brennraum durchgeführt, bei welchem keine Partikelbildung mehr möglich ist.

Bevorzugt wird die zu kühlende Komponente zum Kühlen außen und/oder innen von dem flüssigen Kraftstoff umströmt bzw. durchströmt. Auch hier kann bedarfsabhängig eine optimierte Kühlung erreicht werden.

Es kann auch vorgesehen sein, dass mindestens ein Kraftstoff über Mittel zur Zuführung direkt in den Brennraum und ein weiterer Kraftstoff über zusätzliche Mittel zur Zuführung innerhalb oder außerhalb des Brennraums zur Kühlung zugeführt wird. Zumindest einer der Kraftstoffe, insbesondere beide Kraftstoffe, sind flüssig. Ebenso kann ein einziger gleicher Kraftstoff über mindestens zwei verschiedene Mittel zur Zuführung dosiert und zur Kühlung zugeführt werden.

Der flüssige Kraftstoff wird zur Kühlung der Komponente eingespritzt, insbesondere direkt eingespritzt.

Bevorzugt wird als zu kühlende Komponente eine Einspritzdüse für flüssigen Kraftstoff gekühlt. Die Einspritzdüse kann ausschließlich zur Direkteinspritzung des flüssigen Kraftstoffs ausgebildet sein. Sie kann jedoch auch zur Einspritzung von flüssigen und gasförmigen Kraftstoffen in eine Brennkammer einer Brennkraftmaschine ausgebildet sein. Als flüssige Kraftstoffe können alle derartigen vorgesehen sein, welche für otto- oder dieselmotorische Brennverfahren geeignet sind. Als gasförmiger Kraftstoff ist insbesondere Erdgas vorgesehen.

Es kann auch vorgesehen sein, dass die Kraftstoffe gleichzeitig eingespritzt werden und dazu entsprechende Mittel zur Steuerung und Regelung dieses gleichzeitigen Einspritzens ausgebildet sind. Das Kühlen der Komponente kann auch ohne eine explizite Messung der Temperatur der Komponente und einer dann davon abhängigen Zuführung des flüssigen Kraftstoffs erfolgen und insbesondere durch die Mittel zur Steuerung und Regelung durchgeführt werden.

Bei einem erfindungsgemäßen Kraftstoffzuführsystem für eine wahlweise mit flüssigen und gasförmigen Kraftstoffen betreibbare Brennkraftmaschine, welches zwischen zwei unterschiedlichen Betriebsarten und so von einem Flüssigkraftstoffbetrieb in einen Gasbetrieb umschaltbar ist,
ist im Gasbetrieb eine temperaturbelastete Komponente der Brennkraftmaschine mit dem flüssigen Kraftstoff kühlbar. Die Betriebsweise kann dadurch energieoptimiert und hoch effizient erfolgen. Das Überhitzen und eine daraus resultierende Bauteilbeschädigung, insbesondere einer Benzin-Direkteinspritzdüse, kann dadurch verhindert werden.
Bevorzugt sind Mittel zur Steuerung und Regelung zum gleichzeitigen Einspritzen der Kraftstoffe ausgebildet.

Vorteilhafte Ausgestaltungen des erfindungsgemäßen Betriebsverfahrens sind als vorteilhafte Ausgestaltungen des erfindungsgemäßen Kraftstoffzuführsystems anzusehen.

Ein Ausführungsbeispiel der Erfindung wird nachfolgend näher erläutert.

Ein Fahrzeug mit einer Brennkraftmaschine, welche wahlweise mit flüssigem und gasförmigem Kraftstoff betreibbar ist, kann zwischen unterschiedlichen Betriebsarten umgeschaltet werden. Dies kann insbesondere abhängig vom momentanen Belastungszustand der Brennkraftmaschine erfolgen. Insbesondere kann die Brennkraftmaschine mit Benzin als flüssigen Kraftstoff und Erdgas als gasförmigen Kraftstoff betrieben werden.

Wird vom Benzinbetrieb in den Gasbetrieb übergegangen, so wird zumindest eine temperaturbelastete Komponente der Brennkraftmaschine, im Ausführungsbeispiel eine Benzin-Direkteinspritzdüse für flüssigen Kraftstoff, gekühlt. Dies erfolgt dadurch, dass abhängig von der Temperatur der Komponente prinzipiell entschieden wird, ob ein flüssiger Kraftstoff, insbesondere Benzin, zu dieser temperaturbelasteten Komponente zugeführt wird oder nicht. Ist ein derartiger Temperaturbereich erreicht, so wird Benzin zu dieser Einspritzdüse durchgeleitet und diese von außen und/oder innen durch das die Einspritzdüse umströmende bzw. durchströmende Benzin gekühlt.

Die Menge, welche zum Kühlen zu dieser Einspritzdüse geleitet wird, ist abhängig von der Temperatur der zu kühlenden Einspritzdüse. Die Dosierung kann auch in dem Maß erfolgen, mit welchem die Überhitzung anderer Komponenten des Antriebsstrangs vermieden werden kann.

Das Kühlen der Komponente mit dem Benzin wird insbesondere nach dem Vorgang der Gasverbrennung in der Expansionsphase durchgeführt. Darüber hinaus erfolgt das Kühlen mit dem flüssigen Kraftstoff bei Temperaturen, welche unterhalb einer Temperatur liegen, bei welcher eine Partikelbildung eintritt.

Das Betriebsverfahren und das Kraftstoffeinspritzsystem ermöglichen einen wesentlich erhöhten Bauteilschutz und einen geringeren Gasverbrauch bei nur mäßigem Anstieg des Benzinverbrauchs. Dadurch kann eine sinnvolle Kraftstoffnutzung und Erhöhung der Reichweite des Fahrzeugs im Gasbetrieb erreicht werden.

## Patentansprüche

1. Betriebsverfahren für eine wahlweise mit einem flüssigen und einem gasförmigen Kraftstoff betreibbare Brennkraftmaschine, bei welchem zwischen zwei unterschiedlichen Betriebsarten umgeschaltet und so von einem Flüssigkraftstoffbetrieb in einen Gasbetrieb übergegangen wird,
**dadurch gekennzeichnet, dass**
im Gasbetrieb der Brennkraftmaschine zumindest eine temperaturbelastete Komponente der Brennkraftmaschine mit dem flüssigen Kraftstoff gekühlt wird.

2. Betriebsverfahren nach Anspruch 1,
**dadurch gekennzeichnet, dass**
die Zuführung des flüssigen Kraftstoffs zur zu kühlenden Komponente abhängig von der Temperatur der Komponente durchgeführt wird.

3. Betriebsverfahren nach Anspruch 1 oder 2,
**dadurch gekennzeichnet, dass**
die Menge des flüssigen Kraftstoffs abhängig von der Temperatur der zu kühlenden Komponente zugeführt wird.

4. Betriebsverfahren nach einem der vorhergehenden Ansprüche,
**dadurch gekennzeichnet, dass**
der flüssige Kraftstoff zum Kühlen solange der zu kühlenden Komponente zugeführt wird, bis eine Schwellwerttemperatur erreicht oder unterschritten wird.

5. Betriebsverfahren nach einem der vorhergehenden Ansprüche,
**dadurch gekennzeichnet, dass**
der zweite Kraftstoff gasförmig ist und im Gasbetrieb der Brennkraftmaschine eine Kühlung der temperaturbelasteten Komponente mit dem flüssigen Kraftstoff durchgeführt wird.

6. Betriebsverfahren nach Anspruch 5,
**dadurch gekennzeichnet, dass**
das Kühlen der Komponente mit dem flüssigen Kraftstoff nach dem Vorgang der Gasverbrennung in der Expansionsphase durchgeführt wird.

7. Betriebsverfahren nach einem der vorhergehenden Ansprüche,
**dadurch gekennzeichnet, dass**
das der Zeitpunkt des Kühlens so gewählt wird, dass durch das Kühlen der Komponente keine Partikelbildung im Brennraum eintritt.

8. Betriebsverfahren nach einem der vorhergehenden Ansprüche,
**dadurch gekennzeichnet, dass**
die zu kühlende Komponente zum Kühlen außen und/oder innen von zumindest einem flüssigen Kraftstoff umströmt bzw. durchströmt wird.

9. Betriebsverfahren nach einem der vorhergehenden Ansprüche,
**dadurch gekennzeichnet, dass**
der flüssige Kraftstoff zur Kühlung der Komponente eingespritzt, insbesondere direkt eingespritzt, wird.

10. Betriebsverfahren nach einem der vorhergehenden Ansprüche,
**dadurch gekennzeichnet, dass**
als Komponente eine Einspritzdüse für flüssigen Kraftstoff gekühlt wird.

11. Betriebsverfahren nach einem der vorhergehenden Ansprüche,
**dadurch gekennzeichnet, dass**
ein flüssiger Kraftstoff über Mittel zur Zuführung innerhalb oder außerhalb des Brennraums zur Kühlung zugeführt wird und zumindest ein weiterer Kraftstoff, insbesondere ein weiterer flüssiger Kraftstoff, über Mittel zur Zuführung direkt in den Brennraum der Brennkraftmaschine zugeführt wird.

12. Betriebsverfahren nach einem der vorhergehenden Ansprüche,
**dadurch gekennzeichnet, dass**
ein flüssiger Kraftstoff über mindestens zwei verschiedene Mittel zur Zuführung dosiert wird.

13. Kraftstoffzuführsystem für eine wahlweise mit flüssigem und einem gasförmigen Kraftstoff betreibbare Brennkraftmaschine, welches zwischen zwei unterschiedlichen Betriebsarten und so von einem Flüssigkraftstoffbetrieb in einen Gasbetrieb umschaltbar ist,
**dadurch gekennzeichnet, dass**
im Gasbetrieb der Brennkraftmaschine eine temperaturbelastete Komponente der Brennkraftmaschine mit dem flüssigen Kraftstoff kühlbar ist.

14. Kraftstoffzuführsystem nach Anspruch 13,
**gekennzeichnet durch**
Mittel zur Steuerung und Regelung eines gleichzeitigen Einspritzens der Kraftstoffe.

## Claims

1. Operating method for an internal combustion engine which can be operated selectively with a liquid and a gaseous fuel, in which method a switch is made between two different modes of operation and thus a change is made from a liquid fuel operating mode to a gas operating mode,
**characterized in that**,
in the gas operating mode of the internal combustion engine, at least one thermally loaded component of the internal combustion engine is cooled by means of the liquid fuel.

2. Operating method according to Claim 1,
**characterized in that**
the supply of the liquid fuel to the component to be cooled is realized as a function of the temperature of the component.

3. Operating method according to Claim 1 or 2,
**characterized in that**
the quantity of the liquid fuel is supplied as a function of the temperature of the component to be cooled.

4. Operating method according to one of the preceding claims,
**characterized in that**
the liquid fuel for cooling purposes is supplied to the component to be cooled until a threshold temperature is reached or undershot.

5. Operating method according to one of the preceding claims,
**characterized in that**
the second fuel is gaseous and, in the gas operating mode of the internal combustion engine, cooling of the thermally loaded component by means of the liquid fuel is carried out.

6. Operating method according to Claim 5,
**characterized in that**
the cooling of the component by means of the liquid fuel is carried out in the expansion phase after the process of the gas combustion.

7. Operating method according to one of the preceding claims,
**characterized in that**
the time at which the cooling is carried out is selected such that, as a result of the cooling of the component, no particle formation occurs in the combustion chamber.

8. Operating method according to one of the preceding claims,
**characterized in that**
at least one liquid fuel flows around the outside of and/or through the inside of the component to be cooled in order to cool the latter.

9. Operating method according to one of the preceding claims,
**characterized in that**
the liquid fuel for cooling the component is injected, in particular directly injected.

10. Operating method according to one of the preceding claims,
**characterized in that**,
as a component, an injection nozzle for liquid fuel is cooled.

11. Operating method according to one of the preceding claims,
**characterized in that**
a liquid fuel is supplied, for cooling purposes, via supply means within or outside the combustion chamber, and at least one further fuel, in particular a further liquid fuel, is supplied via supply means directly into the combustion chamber of the internal combustion engine.

12. Operating method according to one of the preceding claims,
**characterized in that**
a liquid fuel is dosed via at least two different supply means.

13. Fuel supply system for an internal combustion engine which can be operated selectively with a liquid and a gaseous fuel, which fuel supply system can be switched between two different modes of operation and thus from a liquid fuel operating mode to a gas operating mode,
**characterized in that**,
in the gas operating mode of the internal combustion engine, a thermally loaded component of the internal combustion engine can be cooled by means of the liquid fuel.

14. Fuel supply system according to Claim 13, **characterized by**
means for controlling and regulating a simultaneous injection of the fuels.

## Revendications

1. Procédé de fonctionnement d'un moteur à combustion interne pouvant fonctionner au choix avec un carburant liquide et un carburant gazeux, dans lequel on commute entre deux modes de fonctionnement différents et l'on passe ainsi d'un mode à carburant liquide dans un mode à carburant gazeux,
**caractérisé en ce que**
dans le mode à carburant gazeux du moteur à combustion interne, au moins un composant du moteur à combustion interne sollicité en température est refroidi avec le carburant liquide.

2. Procédé de fonctionnement selon la revendication 1,
**caractérisé en ce que**
l'apport en carburant liquide au composant à refroidir s'effectue en fonction de la température du composant.

3. Procédé de fonctionnement selon la revendication 1 ou 2,
**caractérisé en ce que**
la quantité de carburant liquide est acheminée en fonction de la température du composant à refroidir.

4. Procédé de fonctionnement selon l'une quelconque des revendications précédentes,
**caractérisé en ce que**
le carburant liquide pour le refroidissement est acheminé au composant à refroidir jusqu'à ce que la température du composant atteigne ou descende en dessous d'une température seuil.

5. Procédé de fonctionnement selon l'une quelconque des revendications précédentes,
**caractérisé en ce que**
le deuxième carburant est gazeux et dans le mode à carburant gazeux du moteur à combustion interne, on effectue un refroidissement du composant sollicité en température avec le carburant liquide.

6. Procédé de fonctionnement selon la revendication 5,
**caractérisé en ce que**
le refroidissement du composant avec le carburant liquide est effectué après l'opération de combustion des gaz dans la phase d'expansion.

7. Procédé de fonctionnement selon l'une quelconque des revendications précédentes,
**caractérisé en ce que**
l'instant de refroidissement est choisi de telle sorte qu'aucune formation de particule ne pénètre dans la chambre de combustion du fait du refroidissement du composant.

8. Procédé de fonctionnement selon l'une quelconque des revendications précédentes,
**caractérisé en ce que**
le composant à refroidir est entouré ou parcouru, en vue du refroidissement à l'extérieur et/ou à l'intérieur, par au moins un carburant liquide.

9. Procédé de fonctionnement selon l'une quelconque des revendications précédentes,
**caractérisé en ce que**
le carburant liquide est injecté, notamment injecté directement, pour le refroidissement du composant.

10. Procédé de fonctionnement selon l'une quelconque des revendications précédentes,
**caractérisé en ce que**
le composant refroidi est une buse d'injection pour le carburant liquide.

11. Procédé de fonctionnement selon l'une quelconque des revendications précédentes,
**caractérisé en ce**
**qu'**un carburant liquide est acheminé par le biais de moyens d'alimentation à l'intérieur ou à l'extérieur de la chambre de combustion en vue du refroidissement et au moins un carburant supplémentaire, notamment un carburant liquide supplémentaire, est acheminé par le biais de moyens d'alimentation directement dans la chambre de combustion du moteur à combustion interne.

12. Procédé de fonctionnement selon l'une quelconque des revendications précédentes,
**caractérisé en ce**
**qu'**un carburant liquide est dosé par le biais d'au moins deux moyens différents d'alimentation.

13. Système d'alimentation en carburant pour un moteur à combustion interne pouvant fonctionner de manière sélective avec du carburant liquide et un carburant gazeux, qui peut être commuté entre deux types de fonctionnement différents et donc d'un mode à carburant liquide dans un mode à carburant gazeux,
**caractérisé en ce que**
dans le mode à carburant gazeux du moteur à combustion interne, un composant du moteur à combustion interne sollicité en température peut être refroidi avec le carburant liquide.

14. Système d'alimentation en carburant selon la revendication 13,
**caractérisé par**
des moyens pour commander et réguler une injection simultanée des carburants.
